# EUROPEAN PATENT SPECIFICATION

(11) **EP 3 972 404 B1**
(45) Date of publication and mention of the grant of the patent: **02.12.2026**
(21) Application number: 20727861.5
(22) Date of filing: 22.05.2020
(51) Int. Cl.: A01B 69/04, A01F 15/07, G05D 1/00

(54) **ROUND BALER**
RUNDBALLENPRESSE
PRESSE À BALLES RONDES

(30) Priority: 22.05.2019 IT 201900007097
(43) Date of publication of application: 30.03.2022
(73) Proprietor: Kverneland Group Ravenna S.r.l., 48026 Russi (RA) (IT)
(72) Inventor: CASADEI, Valerio, 47522 Cesena (Forlì-Cesena) (IT); FRASCELLA, Cosimo, 48022 Lugo (Ravenna) (IT)
(74) Representative: Conti, Marco
(86) International application number: PCT/IB2020/054872
(87) International publication number: WO 2020/234840

(56) References cited:
- EP-A1- 3 146 823
- EP-A1- 3 398 420
- WO-A1-2017/201466
- WO-A1-2018/206592
- US-A1- 2015 101 519

## Description

### Technical field

This invention relates to a baler for providing bales and to a method for producing bales in a baler.

### Background art

Specifically, in the field of balers, in order to collect the crops, three subsequent operations can be performed: the crops are first cut with a harvester, then the crops are grouped with a rake and finally they are stocked in bale through a baler. In other cases, some machines are able to cut and group the crops that are subsequently collected through a baler.

These operations are performed in sequence. Usually, one single tractor is connected to each tool of the respective operation. For example, first the harvester is connected to the tractor and all the crops are cut, then the rake is connected to the tractor to group all the crops and finally the baler is connected to the tractor to form the bales.

It is diffused the necessity to speed up these operations and make them less consuming.

In the field a solution is known in which the baler is self-propelled and is remote controlled. In this solution, disclosed in EP3155890A1, the baler is configured to form bale with parallelepiped form. However, in this solution, a difference between the working speed of the machines can produce a work interruption, with a loss of working time and even safety problems.

Document WO2017201392 shows another example of self-propelled baler, controlled with a cabin connected to the baling chamber. However, this solution requires the presence of an operator and it is, therefore, more expensive.

Patent document WO2017/201466A1 regards a round baler for forming round bales which is either self-propelled or towed; the movement of the baler can be controlled based on instructions stored in a memory device, or on input received from sensors.

Patent document US2015/101519A1 regards autonomous drive systems for agriculture-based operations, with a fleet of tugs to be driven off the road to transport materials.

Patent document WO2018/206592A1 regards a system comprising a controller associated with an agricultural for determining route-plan-data representative of a route to be taken by the agricultural vehicle in an agricultural field; the route-plan-data are based on the location of bales in the agricultural field.

Patent document WO2017/201466A1 discloses a baler according to the preamble of claim 1 and a method for forming bales according to the preamble of claim 13.

However, a need remains of an effective way to drive a self-propelled round baler on the field during its operation.

### Disclosure of the invention

Scope of the present invention is to overcome the aforementioned drawbacks. This scope is achieved by the baler and the method according to the appended claims.

According to an aspect of the present description, the present disclosure provides a baler for producing (providing) bales.

In one embodiment, the baler is a round baler for providing round bales. In other embodiments the baler is configured to form other types of bales, for example square bales.

In one embodiment, the baler is a non-stop baler, configured to form bales without stop an advancing movement. In one embodiment, the baler is an intermittently baler, configured to form bales and interrupt the advancing movement for binding / wrapping and discharging the formed bale.

The baler comprises a frame. The baler comprises two wheels connected to the frame.

The baler comprises a baling chamber. The baling chamber is supported by the frame, for receiving crops and for housing a formed bale.

The baler comprises a conveying assembly. The conveying assembly delimits the baling chamber. The conveying assembly is configured to impart a rotating movement to the crops contained in the baling chamber.

The baler comprises a binder. The binder is configured for binding the formed bale with a fastening element, for example net, twine or plastic film.

The baler comprises a steering system. The steering system is configured to vary an advancing direction of the baler. With the term "advancing direction" is defined the direction of movement of the baler on the ground.

In one embodiment, the baler is self-propelled. The baler comprises a motorization unit. The motorization unit is connected to the first wheel and to the second wheel, for moving the baler on the ground.

The baler comprises a control unit. The control unit comprises a processor, configured to process and generate data.

The baler is an autonomous driving vehicle (ADV). The control unit is configured for generating control signals, for controlling the motorization unit and to the steering system.

The control unit is programmed to derive the control signals from the command signals.

The control unit is connected to the motorization unit for controlling it.

The control unit is configured to receive command signals. The baler comprises a wireless connection. The control unit is configured to receive the command signals through the wireless connection. The control unit is programmed to control the motorization unit. The control unit is programmed to control the steering system. The control unit is programmed to control the motorization unit and/or the steering unit in response to the command signals.

The command signals are representative of a real time position on the field of a driving object moving on the field. The driving object is an object that should be followed by the baler on the field, for example a rake or a harvester towed by or mounted on a tractor or another agriculture machine working in collaboration. The control unit is configured to process the command signals. The control unit is configured to derive in real time a driving path defined by the movement of the driving object. The control unit is programmed to control the steering system to follow the driving path.ln one embodiment, the command signals include route signals, representative of a working path to be followed by the baler on a field.

In one embodiment, the control unit is programmed to derive in real time a driving speed, for an advancing movement of the driving object. The driving speed, in one embodiment, is derived along the driving path.

In one embodiment, the control unit is configured to receive directly the driving speed from the driving object.

In one embodiment, the control unit is programmed to derive in real time a distance between the round baler and the driving object. In one embodiment, the distance is derived along the driving path.

In one embodiment, the control unit is programmed to control the motorization unit to advance the round baler on the driving path at a working speed. In one embodiment, the working speed is responsive to the driving speed and/or to the distance.

In one embodiment, the working speed is higher than the driving speed. In one embodiment, the driving speed is higher than the working speed.

In one embodiment, the control unit is configured to keep the working speed equal to the driving speed.

In one embodiment, the control unit includes a memory. The control unit has a minimum distance value memorized into the memory. The control unit has a maximum distance value memorized into the memory.

In one embodiment, the control unit is programmed to control the motorization unit to keep the distance greater than the minimum distance value. In one embodiment, the control unit is programmed to control the motorization unit to keep the distance below the maximum distance value.

In one embodiment, the control unit is programmed to generate a warning signal. In one embodiment, the control unit is programmed to generate the warning signal, responsive to the driving speed and/or to the distance. In one embodiment the warning signal is assigned to the driving object. In one embodiment the warning signal is assigned to the baler.

In one embodiment, the motorization unit is configured to speed up or interrupt the advancing of the baler in response to the warning signals.

In one embodiment, the baler comprises a third wheel. In one embodiment, the baler comprises a fourth wheel. In one embodiment, the baler comprises a first axle. The first axle is elongated along a transversal direction. The first axle is connected to the first wheel and the second wheel.

In one embodiment, the baler comprises a second axle. The second axle is spaced apart from the first axle along a longitudinal direction, perpendicular to the transversal direction. The second axle is connected to the third and the fourth wheel.

In one embodiment, the second axle is associated to the steering system to vary the advancing direction of the baler.

In one embodiment the centre of gravity of the baler is between the first axle and the second axle. In one embodiment the centre of gravity of the baler is between the first axle and the second axle, along the longitudinal direction. In one embodiment the centre of gravity of the baler is at a distance from the first axle greater than 20cm. In one embodiment the centre of gravity of the baler is at a distance from the first axle greater than 50cm. In one embodiment the centre of gravity of the baler is at a distance from the first axle between 20 cm and 50cm. In one embodiment the centre of gravity of the baler is at a distance from the first axle equal to half of the distance between the first and the second axle along the longitudinal direction.

In one embodiment, the distance between the first axle and the second axle along the longitudinal direction is between 80cm and 120cm. In one embodiment, the distance between the first axle and the second axle along the longitudinal direction is (approx.) 100cm.

In one embodiment, the baler comprises an on-board power source. The on-board power source is connected to the motorization unit for providing a motorization power.

In one embodiment, the motorization unit is an electrical motor. In another embodiment, the motorization unit is a hydraulic motor.

In one embodiment, the power source comprises a motor. The power source comprises a generator. The generator is configured to transform the mechanical power of the motor into electrical power.

In one embodiment, the baler comprises a power accumulator. In one embodiment, the power source is defined by the accumulator. In one embodiment, the accumulator is an electrical accumulator, such as a battery.

The baler comprises a pick up device, which is configured to pick-up the crops from the ground.

The baler comprises a feeding channel, associated with the pick-up device to receive crops. The feeding channel extends towards the baling chamber to feed the crops to the baling chamber.

The feeding chamber has a bottom wall defining a drop floor, that holds the crops passing through the feeding channel.

In one embodiment, the baler comprises a plurality of knives. The plurality of knives faces towards the feeding channel to cut the crops passing thereto. The plurality of knives passes through respective holes in the drop floor to transversally cut the feeding channel.

In one aspect of the present disclosure (which applies to any typology of balers, particularly round balers, thus not limited to self-propelled balers), the baler (either self-propelled baler towed baler) comprises a group of electrical actuators. This aspect of the present disclosure is further explained in the following.

The group of actuators are electrically powered by the on-board power source and/or by the accumulator.

The group of electrical actuators may comprise electric motors and/or electric linear actuators.

In one example, the group of actuators includes a first actuator.

In one example, the conveying assembly includes a plurality of rollers. The first actuator is configured to actuate the plurality of rollers.

In one example, the conveying assembly includes a belt and a plurality of pulleys. The first actuator is configured to actuate the belt and the plurality of pulleys.

In one example, the baler includes a transmission. The transmission can be a chain transmission or a belt transmission or a combination thereof. In one example, the transmission is connected to the plurality of rollers and to the first actuator, to transmit the movement. In one example, the transmission is connected to the belt and to the first actuator, to transmit the movement.

In one example, the first actuator is an electric motor.

In one example, the baler comprises a discharge gate, movable from a closed position, wherein the bale is contained into the baling chamber, and an open position, wherein the bale is discharged from the baling chamber.

The group of actuators includes a second actuator. In one example, the second actuator is configured to actuate the discharge gate.

In one example, the baler comprises a pick-up device. The pick-up device is rotatable to pick-up crops from the ground. In one example, the group of actuators includes a third actuator. The third actuator is configured to rotate the pick-up device. In one example the third actuator is an electric motor.

In one example, one or more of the actuators of the group of electric actuators is configured to perform one or more of the following actions:
- move the pick-up device between a working position and a maintenance position;
- move the plurality of knife of the baler;
- move the drop floor of the feeding channel.

The baler comprises a hydraulic actuator. In one example, the hydraulic actuator is connected to the discharge gate to move it between the closed position to the open position.

In one example, the baler comprises a group of (one or more) hydraulic actuators. In one example, the baler comprises a hydraulic pump. The hydraulic pump is electrically driven by the control unit. The hydraulic pump is configured to pressurize a compression fluid to be distributed into the hydraulic actuator or into the group of hydraulic actuators.

In one example, the pick-up device is movable between a working position and a maintenance position. In one embodiment, a first hydraulic actuator of the group of hydraulic actuators is connected to the pick-up device to move it between the maintenance position to the working position.

In one example, a second hydraulic actuator of the group of hydraulic actuators is connected to the discharge gate to move it between the closed position to the open position.

In one example, the baler comprises a group of sensors. The group of sensors comprises a camera. The group of sensors is positioned into an upper part of the frame. The group of sensors is positioned above the conveying assembly along the vertical direction, parallel to the direction of the weight force.

According to an aspect of the present description, the disclosure provides an agricultural working system. The agriculture working system comprises a a round baler.

It is hereby clarified that one or more of the features disclosed in the present document for the baler shall be considered valid and disclosed also for the baler of the agriculture working system.

The agriculture working system comprises a driving object. The driving object could be a harvester, a rake towed by or mounted on a tractor or another agriculture machine working in collaboration, preferably in sequence, with the baler.

The agriculture working system comprises a remote control system. In one embodiment, the remote control system is integrated in the driving object or part of it.

In one embodiment, the driving object comprises a respective GPS system, to determine his position on the field.

In one embodiment, the agriculture working system comprises a remote control station. In this embodiment, the remote control system could be placed on the remote control station and/or on the driving object.

The remote control system is configured to detect a real time position of the driving object moving on the field. The remote control system is configured to send command signals, representative of the real time position of the driving object to the control unit of the baler through a wireless connection.

In one embodiment, the driving object is configured to send the real time position to the remote control system of the remote control station. In this embodiment, the remote control station is programmed to send the command signals to the baler via the wireless connection.

In one embodiment, the driving object is configured to send to the control unit of the baler a speed signal, representative of the driving speed or representative of the optimal speed to be followed by the baler.

In one embodiment, the baler is configured to detect the crops to be collected. In one embodiment, the baler is configured to send conditioning signal to the driving object. For example, the baler is configured to command the driving object in order to slow down its speed, as a function of the crops to be collected.

In one embodiment, the control unit of the baler is configured to derive a driving path of the driving object, as a function of the command signals.

In one embodiment, the control unit is configured to derive a distance between the baler and the driving object along the driving path.

In one embodiment, the control unit is configured to derive a driving speed, that is the speed of the driving object along the driving path.

In one embodiment, the control unit is configured to derive a working speed, that is the speed of the baler along the driving path.

In one embodiment, the control unit is configured to control the working speed as a function of the driving speed and/or the distance.

The control unit is programmed to generate warning signals in response to a value of the working speed and to a value of the driving speed. The control unit is programmed to generate warning signals in response to a value of the distance.

In one embodiment, the control unit is configured to send the warning signal to the driving object via wireless connection.

The driving object is configured to speed up, slow down or interrupt the advancing of the baler in response to the warning signals.

According to a further aspect of the present description, the present document provides a method for providing (producing, forming) a bale, preferably a round bale.

The method comprises a step of moving a baler including a baling chamber, along a working path.

The method comprises a step of receiving of crops into the baling chamber.

The method comprises a step of conveying crops into the baling chamber with a conveying system.

The method comprises a step of generating a bale into the baling chamber.

The method comprises a step of binding the bale with a binder. The method comprises a step of discharging the bale.

The method comprises a step of activation of a motorization unit. The motorization unit is positioned on the baler and is connected to a first and a second wheel of the baler.

The method comprises a step of controlling, wherein a control unit of the baler controls the activation of the motorization unit.

The method comprises a step of steering. In the step of steering, a steering system varies an advancing direction of the baler. In the step of steering, the control unit receives command signals, through a wireless connection. The control unit controls the motorization unit and the steering system in response to the command signals. The control unit generates control signals, as a function of the command signals. The control unit sends the control signals to the motorization unit and/or to the steering system.

The command signals are representative of a real time position on a field of a driving object moving on the field. The method comprising a step of derivation. In the step of derivation, the control unit processes the command signals. In the step of derivation, the control unit derives a driving path defined by the movement of the driving object. In the step of derivation, the control unit controls the steering system to follow (to make the baler following) the driving path.

In one embodiment, the method includes one or more of the following steps:
- deriving a driving speed, for an advancing movement of the driving object along the driving path;
- deriving a distance between the round baler and the driving object, preferably along the driving path.

In one embodiment, the control unit control the motorization unit to advance the round baler on the driving path at a working speed. In one embodiment, the control unit derives the working speed, responsive to the driving speed or to the distance.

In one embodiment, the method comprises a step of powering. In the powering step, an on-board power source electrically feds the motorization unit. In one embodiment, the method comprises a step of accumulating. In the accumulating step, an accumulator is charged with electrical power. In one embodiment, in the powering step, the accumulator feds the motorization unit.

In one embodiment, the method comprises a step of auxiliary actuation. In the step of auxiliary actuation, the control unit activates at least one electrical actuator of a group of electrical actuators, with the on-board power source or with the accumulator. In one embodiment, the step of auxiliary actuation includes one or more of the following steps:
- actuating a first actuator (one or more actuator of the group of electrical actuators, preferably an electric motor) for rotating a plurality of rollers of the chamber;
- actuating a second actuator (one or more actuator of the group of electrical actuators, preferably a linear electrical actuator) for moving a discharge gate of the baler between a closed position and an open position;
- actuating a third actuator (one or more actuator of the group of electrical actuators, preferably an electric motor) for rotating a pick-up device of the baler;
- actuating the plurality of knife of the baler with one or more actuator of the group of electrical actuators, preferably a linear electrical actuator;
- actuating the drop floor with one or more actuator of the group of electrical actuators, preferably a linear electrical actuator.

In one embodiment, the method comprises a step of hydraulic actuation. In the step of hydraulic actuation, a hydraulic pump increases the pressure of a driving fluid. The hydraulic pump is electrically powered by the accumulator and/or by the on-board power source.

The hydraulic pump sends the driving fluid to a group of hydraulic actuators. In a preferred embodiment, the hydraulic pump sends the driving fluid to a second hydraulic actuator, to move the discharge gate.

In another embodiment, the hydraulic pump sends the driving fluid to a first hydraulic actuator, to move the pick-up device and/or the plurality of knife of the baler.

The control unit of the baler is configured for receiving information representative of a real time position of the driving object (preferably the tractor) on the ground and is programmed to generate the control signals responsive to the position of the driving object. The control unit is configured to control the movement of the baler on the ground (e.g. for controlling the motorization unit and the steering system) simultaneously with respect to the formation of the bale (that is, simultaneously with respect to the movement of the a conveying assembly for imparting the rotating movement to the agricultural products, such as hay and grass).

The control unit of the baler receives information representative of a real time position of a tractor on the ground and controls the movement of the baler along the working path responsive to (as a function of) the position of the tractor (with respect to a pre-established spatial reference system). The control unit may control the movement of the baler along the working path simultaneously with respect to the steps of conveying the crops into the baling chamber and generating the bale into the baling chamber.

### Brief description of drawings

This and other features of the invention will become more apparent from the following detailed description of a preferred, non-limiting example embodiment of it, with reference to the accompanying drawings, in which:

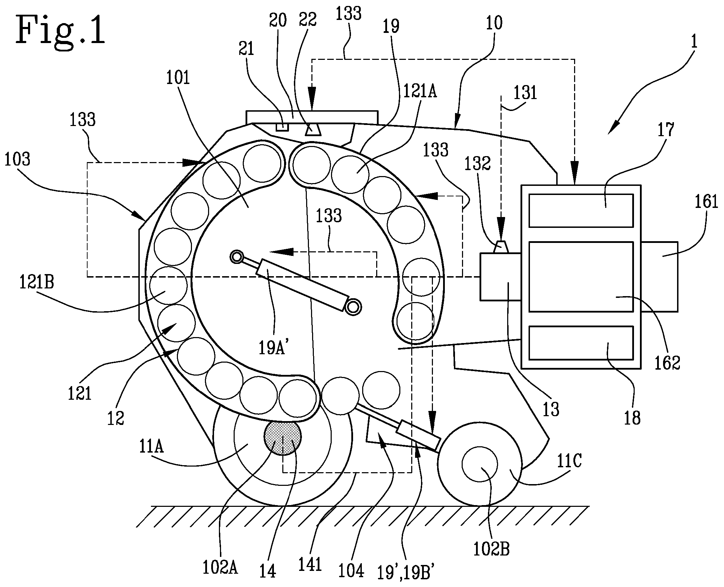

- Figure 1 illustrates a round baler for providing round bales;

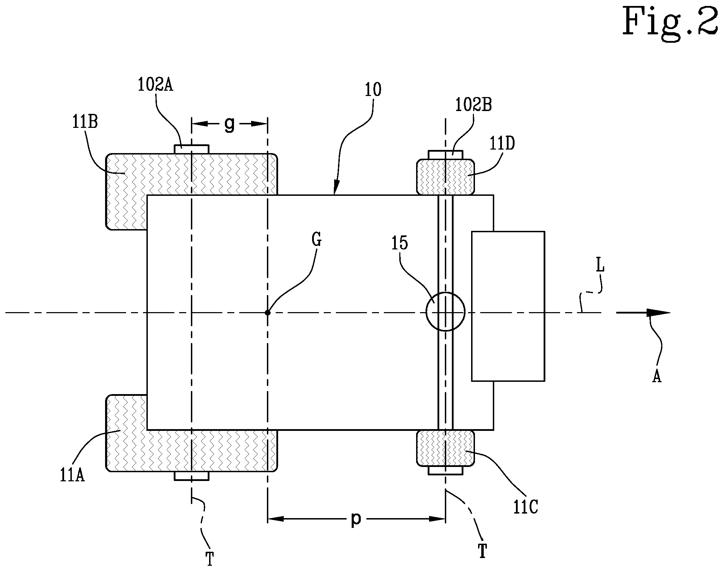

- Figure 2 illustrates a schematic view of the round baler of Figure 1;

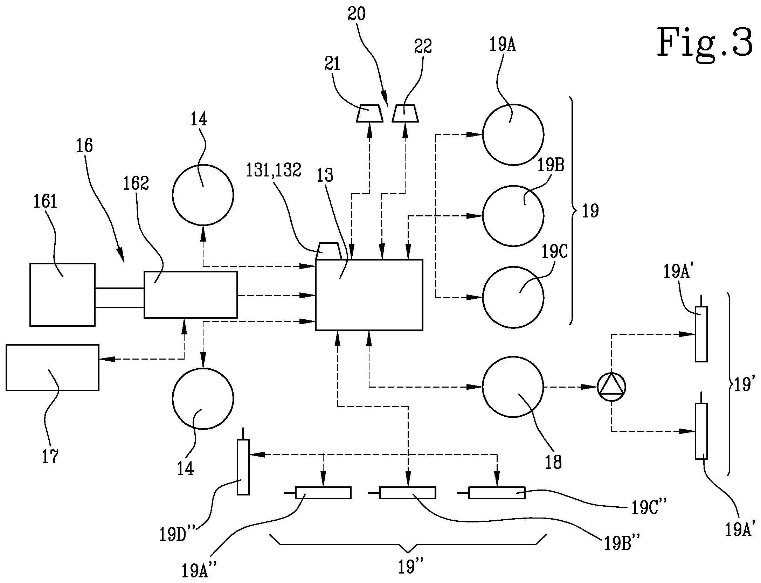

- Figure 3 illustrates a schematic view of power path into the baler;

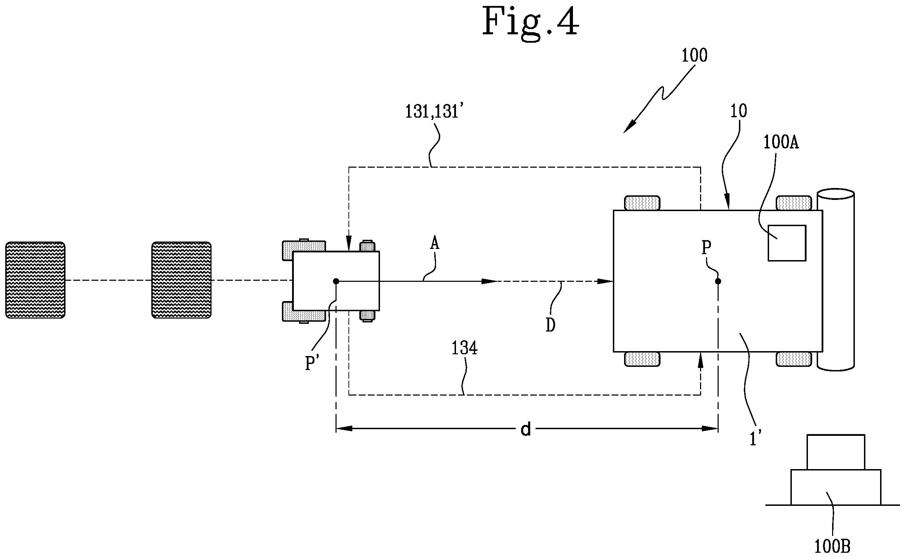

- Figure 4 illustrates an agriculture working system;

### Detailed description of preferred embodiments of the invention

With reference to the accompanying drawings, the numeral 1 denotes a baler, according to the present disclosure.

The baler 1 comprises a frame 10. The frame 10 includes a baling chamber 101, wherein a bale is housed.

In one embodiment, the baler 1 is a round baler for providing round bales. In other embodiments the baler is configured to form other types of bales, for example square bales.

In one embodiment, the baler 1 is a non-stop baler, configured to form bales without stop an advancing movement. In one embodiment, the baler 1 is an intermittently baler, configured to form bales and interrupt the advancing movement for discharging the formed bale.

In one embodiment, the baling chamber is a variable baling chamber. In this embodiment, the capacity of the baling chamber changes during the baling formation.

The baler 1 comprises a first wheel 11A. The baler 1 comprises a second wheel 11B. The first wheel 11A and the second wheel 11B are associated to the frame 10. In one embodiment, the baler 1 comprises a first axle 102A. In one embodiment, the first wheel 11A and the second wheel 11B are connected to a first end of the first axle 102A and a second end of the first axle 102A, respectively.

In one embodiment, the frame 10 is supported by the first axle 102A.

The baler 1 comprises a third wheel 11C. The baler 1 comprises a fourth wheel 11D. The third wheel 11C and the fourth wheel 11D are associated to the frame 10.

In one embodiment, the baler 1 comprises a second axle 102B. In one embodiment, the third wheel 11C and the fourth wheel 11D are connected to a first end of the second axle 102B and a second end of the second axle 102B, respectively.

In one embodiment, the frame 10 is supported by the first axle 102A and/or the second axle 102B.

In one embodiment, the first axle 102A and the second axis 102B are elongated along a transversal direction T.

The baling chamber 101 is supported by the frame. In one embodiment, the baling chamber 101 is a cylinder chamber having his symmetry axis parallel to the transversal direction T.

The baler comprises a conveying assembly 12. The conveying assembly 12 delimits the baling chamber 101.

The conveying assembly 12 is configured to impart a rotating movement to the crops contained in the baling chamber 101.

In one embodiment, the conveying assembly 12 comprises a plurality of rollers 121. The plurality of rollers comprises a group of front rollers 121A and a group of back rollers 121B.

The plurality of rollers 121 is configured to rotate in order to impart a rotating movement to the crops contained in the baling chamber 101.

In the embodiment with the variable baling chamber, the conveying system comprises a belt and a group of pulleys. The belt is engaged with the pulleys and in contact with the crops to impart a rotating movement.

The baler 1 comprises a binder. The binder is configured for binding the formed bale with a fastening element, for example net, twine or plastic film.

The baler 1 comprises a control unit 13. The control unit is configured to control the baler 1.

The control unit 13 comprises one or more of the following features:
- a memory, configured to store data;
- a processor, configured to process and generate data;
- a receiver, configured to receive signals;
- a transmitter, configured to transmit signals;
- a wireless connection.

In one embodiment, the receiver and/or the transmitter are configured to receive and/or transmit signals through a wireless connection.

In one embodiment, the baler 1 is self-propelled (self-movable, tracker baler, self-driven). In other words, the baler 1 is self-movable or is capable to move itself on the ground without any tractor unit.

In one embodiment, the baler 1 comprises motorization unit 14. The motorization unit 14 is connected to the first wheel 11A and to the second wheel 11B, for moving the baler 1 on the ground.

In one embodiment, the control unit 13 is connected to the motorization unit 14 for controlling it. In one embodiment, the control unit 13 is configured to send activation signals 141 to the motorization unit 14.

In one embodiment, the baler comprises a steering system 15. The steering system 15 is configured to vary an advancing direction A of the baler 1.

In one embodiment, the steering unit 15 comprises a hinged bar. The hinged bar is connected to the second axle 12B to vary an inclination of the second axle 12B with respect to the transversal direction T.

In other embodiments, the steering system 15 comprises a speed variator. The speed variator is connected to the motorization unit 14. The speed variator is configured to make independent a rotational speed of the first wheel 11A from a rotational speed of the second wheel 11B. Hence, a steering effect is obtained by forcing the first wheel 11A and the second wheel 11B to rotate at different rotational speed.

In one embodiment, the control unit 13 is configured to receive command signals 131. In one embodiment, the control unit 13 is configured to receive the command signals 131 through the wireless connection (trough the receiver 132).

The processor of the control unit 13 is programmed to process the command signals 131. In one embodiment, the processor of the control unit 13 is programmed to generate the activation signals 141, response to the command signals 131. In one embodiment, the control unit 13 is configured to send the activation signals to the motorization unit 14.

The processor of the control unit 13 is programmed to generate control signals 133, response to the command signals 131.

In one embodiment, the control unit 13 is configured to send the control signals 133 to the conveying assembly 12.

In one embodiment, the baler 1 comprises a discharge gate 103. In one embodiment, the baler 1 comprises a pick-up device 104. In one embodiment, the discharge gate 103 is movable between a closed position wherein the baling chamber 101 houses the formed bale, and an open position, wherein the formed bale is discharged from the baling chamber 101. In one embodiment, the pick-up device 104 is movable between a working position, wherein pick-up device 104 is picking up crop from the ground, and a maintenance position, wherein pick-up device 104 is in a raised position, away from the frame 10.

The baler may comprise a plurality of knives. The knives are operatively active to cut the crops passing through feeding channel. The knives are movable to an operative position (wherein they protrude in the feeding channel) to a retracted position, so that they can be subject to maintenance or repair. The baler may comprise a knives actuator 19A", to move the plurality of knives between the operative position and the retracted position.

The baler may comprise a drop floor. The drop floor defines a bottom wall of the feeding chamber. The drop floor is movable between a raised position and a lowered position, to allow the user to access the feeding channel, for example to remove objects that may occlude the channel. The baler may comprise a drop floor actuator 19B", to move the drop floor between the raised position and the lowered position.

The baler may comprise a pick-up actuator 19C", to move (movable elements included in) the pick-up device.

The baler 1 may comprise a binder brake actuator 19D". The binder brake actuator 19D" is configured to operate a brake, which is operatively active to stop or slow down a movement of the binding material (e.g. net or twine).

The knives actuator 19A", the drop floor actuator 19B", the pick-up actuator 19C" and the binder brake actuator 19D" form a further group of actuators 19". Each one of these actuators of the further group of actuators 19" may be a pneumatic actuator (as an alternative, it could be an electric actuator or a hydraulic actuator, or any other typology of actuator). One or more of (preferably all of) e these actuators of the further group of actuators 19" are connected to the control unit 13; the control unit 13 is configured to control one or more of (preferably all of) e these actuators of the further group of actuators 19".

In one embodiment, the control unit 13 is configured to send the control signals 133 to the discharge gate 103, to control the movement between the closed and the open position of the baling chamber. In one embodiment, the control unit 13 is configured to send the control signals 133 to the pick-up device 104, to control the movement between the working and the maintenance position.

In one embodiment, the control unit 13 is programmed to control the motorization unit 14. In one embodiment, the control unit 13 is programmed to control the steering system 15. In one embodiment, the control unit 13 is programmed to control the motorization unit 14 and/or the steering unit 15 in response to the command signals 131.

In one embodiment, the command signals 131 are representative of a real time position P of a driving object 1' moving on the field. The driving object 1' is an object that should be followed by the baler 1 on the field, for example a rake or a harvester towed by or mounted on a tractor or another agriculture machine working in collaboration. The processor of the control unit 13 is configured to process the command signals 131. The processor of the control unit 13 is configured to derive, preferably in real time, a driving path D defined by the movement of the driving object 1'. The control unit 13 is programmed to control the steering system 15 to follow the driving path D. The driving path D is derived from a succession of real time position P received by the control unit 13 through the wireless connection.

In one embodiment, the command signals 131 include route signals 131', representative of the driving path D to be followed by the baler 1 on a field.

In one embodiment, the control unit 13 is programmed to derive in real time a driving speed, for an advancing movement of the driving object 1'. The driving speed, in one embodiment, is derived along the driving path D.

In one embodiment, the control unit 13 is configured to receive a value of the driving speed through the command signals 131. In other embodiments, the control unit 13 is configured to derive the driving speed from the variation of the real time position P of the driving object 1'.

In one embodiment, the control unit 13 comprises a GPS system, configured to get a real time position P' of the baler on the field.

In one embodiment, the control unit 13 is programmed to derive in real time a distance d between the round baler 1 and the driving object 1'. In one embodiment, the distance d is derived along the driving path D.

In one embodiment, the control unit 13 is programmed to control the motorization unit 14 to advance the round baler 1 on the driving path D at a working speed. In one embodiment, the working speed is responsive to the driving speed and/or to the distance d.

In one embodiment, the working speed is temporary higher than the driving speed. In one embodiment, the driving speed is higher than the working speed.

In one embodiment, the control unit 13 is configured to keep the working speed equal to the driving speed, controlling the working speed of the motorization unit 14 through the activation signals 141.

In one embodiment, the control unit 13 has a minimum distance value memorized into the memory. In still another embodiment the control unit 13 has a maximum distance value memorized into the memory.

In one embodiment, the control unit is programmed to compare, preferably in real time, the distance d with the minimum distance value and/or the maximum distance value. In one embodiment, the control unit 13 is programmed to control the motorization unit 14 to keep the distance d below the maximum distance value. In one embodiment, the control unit 13 is programmed to control the motorization unit 14 to keep the distance d greater than the minimum distance value.

In one embodiment, the control unit 13 is programmed to generate a warning signal 134. In one embodiment, the control unit 13 is programmed to generate the warning signal 134, responsive to the driving speed and/or to the distance d. In one embodiment the warning signal 134 is for the driving object 1'. In one embodiment the warning signal 134 is for the baler 1.

In one embodiment, the control unit 13 is configured to generate an emergency signal, response to the warning signal 134. The control unit 13 is configured to send the emergency signal to the motorization unit, to speed up, slow down or interrupt the advancing movement of the baler 1.

In one embodiment, the baler 1 has a centre of gravity G.

In one embodiment the centre of gravity of the baler G is between the first axle 102A and the second axle 102B. In one embodiment the centre of gravity G of the baler is between the first axle 102A and the second axle 102B, along a longitudinal direction L, perpendicular to the transversal direction T. In one embodiment the centre of gravity G of the baler 1 is at a distance g from the first axle 102A greater than 20cm. In one embodiment the distance g from the first axle 102A is between 20 cm and 50cm. In one embodiment the distance g from the first axle 102A is equal to half of the distance between the first 102A and the second axle 102B along the longitudinal direction.

In one embodiment, a distance p between the first axle 102A and the second axle 102B along the longitudinal direction L is between 80cm and 120cm. In one embodiment, the step p is (approx.) 100cm.

In one embodiment, the baler comprises an on-board power source 16.

In one embodiment, the on-board power source 16 comprises a motor 161 (endothermic motor).

The on-board power source 16 is connected to the motorization unit 14 for providing a motorization power.

In one embodiment, the motorization unit is an electrical motor.

The on-board power source 16 comprises a generator 162. The generator 162 is configured to transform the mechanical power of the motor 161 into electrical power. The electrical power generated by the generator 162 is configured to fed the control unit 13 and, controlled by the control unit 13 itself, to power the discharge gate 103, the pick-up device 104, the motorization unit 14.

In one embodiment, the baler 1 comprises a on-board power accumulator 17. In one embodiment, the power source 16 is defined by the accumulator 17. In one embodiment, the accumulator 17 is an electrical accumulator, such as a battery.

In one embodiment, the baler 1 comprises an hydraulic actuator 18, configured to pressurize and actuating fluid. The hydraulic actuator 18 is electrically powered by the control unit 13.

In one embodiment, the baler 1 includes a sensor assembly (group of sensors) 20. In one embodiment, the sensor assembly 20 includes a camera 21. In one embodiment, the sensor assembly 20 includes a net sensor 22, configured to detect the presence of a net on the formed bale.

In one embodiment, the baler 1 comprises a group of electrical actuators 19.

The group of actuators 19 are electrically powered by the on-board power 16 source and/or by the accumulator.

In one embodiment, the group of actuators 19 includes a first actuator 19A. In one embodiment, the first actuator 19A is electrically powered. The first actuator 19A is an electrical motor. In one embodiment, the first actuator 19A is configured to actuate (a transmission of) the pick-up device 104. In one embodiment, the first actuator 19A is controlled by the control unit 13 to actuate (a transmission of) the pick-up device 104.

In one embodiment, the group of actuators 19 includes a second actuator 19B. In one embodiment, the second actuator 19B is electrically powered. In one embodiment, the second actuator 19B is configured to actuate (a transmission of) the group of front rollers 121A (or the belt in the non-stop baler machine and/or variable baling chamber). In one embodiment, the second actuator 19B is controlled by the control unit 13 to actuate (a transmission of) the group of front rollers 121A (or the belt in the non-stop baler machine).

In one embodiment, the group of actuators 19 includes a third actuator 19C. In one embodiment, the third actuator 19C is electrically powered. In one embodiment, the third actuator 19C is configured to actuate (a transmission of) the group of back rollers 121B (or the belt in the non-stop baler machine and/or variable baling chamber).

In one embodiment, the third actuator 19C is controlled by the control unit 13 to actuate (a transmission of) the group of back rollers 121B (or the belt in the non-stop baler machine).

In one embodiment, the baler 1 comprises a group of hydraulic actuators 19'.

The group of hydraulic actuators 19' are powered by the hydraulic pump 18 that is configured to fed them with the activating fluid.

In one embodiment, the group of hydraulic actuators 19' includes a first hydraulic actuator 19A'. In one embodiment, the first hydraulic actuator 19A' is configured to actuate (a transmission of) the discharge gate 103, moving it between the closed and the open position. In one embodiment, a supply of driving fluid (activating fluid) to the first hydraulic actuator 19A' is controlled by the control unit 13.

In one embodiment, the group of hydraulic actuators 19' includes a second hydraulic actuator 19B'. In one embodiment, the second hydraulic actuator 19B' is configured to actuate (a transmission of) the pick-up device 104, moving it between the working position and the raised position.

In one embodiment, a supply of driving fluid (activating fluid) to the second hydraulic actuator 19B' is controlled by the control unit 13.

In one embodiment, the group of hydraulic actuators 19' is configured to actuate a break for the net in the binder and/or the plurality of knifes in the pick-up device 104.

According to a further aspect of the present invention, the description provides also an agricultural working system 100. The agriculture working system 100 comprises a baler 1, preferably a round baler.

It is hereby clarified that one or more of the features disclosed in the present document for the baler 1 shall be considered valid and disclosed also for the baler of the agriculture working system 100.

The agriculture working system comprises a driving object 1'. The driving object 1' could be a harvester, a rake towed by or mounted on a tractor or another agriculture machine working in collaboration, preferably in sequence, with the baler 1.

In one embodiment, the driving object 1' comprises a respective GPS system, to determine his position on the field.

In one embodiment, the agriculture working system 100 comprises a remote control system 100A. In one embodiment, the remote control system 100A is placed on the driving object 1'. The remote control system 100A is configured to:
- receive signals through a wireless connection, and/or;
- send signals through the wireless connection.

In one embodiment, the agriculture working system 100 comprises a remote control station 100B. In this embodiment, the remote control system 100A could be placed on the remote control station and/or on the driving object 1'.

The remote control station 100B is configured to:
- receive signals through a wireless connection, and/or;
- send signals through the wireless connection.

In one embodiment, the remote control system 100A is configured to detect a real time position P of the driving object 1' moving on the field. In one embodiment, the remote control system 100A is configured to detect a driving speed of the driving object 1' moving on the field.

In one embodiment, the remote control system 100A is configured to send command signals 131, representative of the real time position P of the driving object 1' to the control unit 13 of the baler 1 through a wireless connection.

Therefore, in this embodiment, the control unit 13 of the baler 1 is configured to directly communicate with the remote control system 100A of the driving object 1'. In other embodiment, the driving object 1' is configured to send the real time position P to the remote control station 100B. In this embodiment, the remote control station 100B is programmed to send the command signals 131 to the baler 1 via the wireless connection. Hence, in this embodiment, the communication between the control unit 13 of the baler 1and the remote control system 100A of the driving object 1' is mediate by the remote control station, that is distanced form the baler 1 and the driving object 1'.

In one embodiment, the control unit 13 of the baler 1 is configured to derive a driving path D of the driving object, as a function of the command signals 131.

In one embodiment, the control unit 13 is configured to derive a distance d between the baler 1 and the driving object 1' along the driving path D.

In one embodiment, the control unit 13 is configured to derive a driving speed, that is the speed of the driving object 1' along the driving path D.

In one embodiment, the control unit 13 is configured to derive a working speed, that is the speed of the baler 1 along the driving path D.

In one embodiment, the control unit 13 of the baler 1 is configured to control the working speed as a function of the driving speed and/or the distance d.

The control unit 13 is programmed to generate warning signals 134 in response to a value of the working speed and to a value of the driving speed. The control unit 13 is programmed to generate the warning signals 134 in response to a value of the distance d.

In one embodiment, the control unit 13 is configured to send the warning signal 134 to the driving object 1' via wireless connection.

The driving object 1' is configured to speed up, slow down or interrupt the advancing of the baler 1 in response to the warning signals 134.

According to a further aspect of the present description, the present disclosure provides a method for providing (producing, forming) a bale, preferably a round bale.

The method comprises a step of moving a baler 1 including a baling chamber 101, along a working path.

The method comprises a step of receiving of crops into the baling chamber 101.

The method comprises a step of conveying crops into the baling chamber 101 with a conveying system 12.

The method comprises a step of generating a bale into the baling chamber 101. The method comprises a step of binding the bale with a binder. The method comprises a step of discharging the bale, through a discharge gate 103.

In one embodiment, the method comprises a step of activation of a motorization unit 14. In one embodiment, the motorization unit 14 is positioned on the baler 1 and is connected to a first 11A and a second wheel 11B of the baler 1. The motorization unit 14 can be a thermic motor or an electric motor.

In one embodiment, the method comprises a step of controlling, wherein a control unit 13 of the baler 1 controls the activation of the motorization unit 14.

In one embodiment, the method comprises a step of steering. In the step of steering, a steering system 15 varies an advancing direction A of the baler 1. In the step of steering, in one embodiment, the steering system 15 varies the speed of each of the first 11A and the second 11B wheel separately in order to produce a certain rotation of the advancing direction A.

In the step of steering, in one embodiment, the steering system 15 varies the inclination of a first axle 102A, connected to the first 11A and the second 11B wheel, with respect to the working path in order to produce a certain rotation of the advancing direction A.

In the step of steering, the control unit 13 receives command signals 131, preferably through a wireless connection. In one embodiment, the control unit 13 controls the motorization unit 14 and the steering system 15 in response to the command signals 131. In particular, the control unit 13 generates control signals 133 and/or activating signals 141, in response to the command signals 131. The control unit 13 sends the activating signals 141 to the motorization unit and/or to the steering system. The control unit 13 sends the control signals 133 to a group of electrical actuators 19 and/or to a group of hydraulic actuators 19'.

In one embodiment, wherein the command signals 131 are representative of a real time position P on a field of a driving object 1' moving on the field, the method comprising a step of derivation. In the step of derivation, the control unit 13 processes the command signals 131 to derive a driving path D defined by the movement of the driving object 1'. In the step of derivation, the control unit 13 controls the steering system 15 to follow (to make the baler 1 following) the driving path D.

In one embodiment, the control unit 13 derives a driving speed for an advancing movement of the driving object 1' along the driving path D response to the real time position P (response to the command signals 131);

In one embodiment, the control unit 13 derives a distance d between the (round) baler 1 and the driving object 1', preferably along the driving path D.

In one embodiment, the control unit 13 generates speed signals, representative of a working speed of the baler 1 on the ground in the advancing direction A, in response of the driving speed and/or the distance d.

In one embodiment, the method comprises a step of powering. In the powering step, an on-board power source 16 electrically feds the motorization unit 14. In one embodiment, the method comprises a step of accumulating. In the accumulating step, an accumulator 17 is charged with electrical power. In one embodiment, in the powering step, the accumulator 17 feds the motorization unit 14.

In one embodiment, the method comprises a step of auxiliary actuation. In the step of auxiliary actuation, the control unit 13 activates at least one electrical actuator of a group of electrical actuators 19, with the on-board power source 16 or with the accumulator 17. In one embodiment, the step of auxiliary actuation includes one or more of the following steps:
- actuating a first actuator 19A for rotating a group of front rollers 121A of the chamber 101;
- actuating a second actuator 19B for rotating a group of back rollers 121B of the chamber 101;
- actuating a third actuator 19C for rotating a pick-up device 104 of the baler 1.

In one embodiment, the method comprises a step of hydraulic actuation. In the step of hydraulic actuation, a hydraulic pump 18 increases the pressure of a driving (actuating) fluid. The hydraulic pump 18 is electrically powered by the accumulator 17 and/or by the on-board power source 16.

The hydraulic pump sends the driving fluid to a group of hydraulic actuators 19'. In one embodiment, the hydraulic pump 18 sends the driving fluid to a first hydraulic actuator 19A', to move the discharge gate 104.

In one embodiment, the hydraulic pump 18 sends the driving fluid to a second hydraulic actuator 19B', to move the pick-up device 103.

According to one aspect of the present disclosure, a round baler 1 is provided (either self-propelled or towed) for providing round bales, comprising: a frame 10; a first wheel 11A and a second wheel 11B associated to the frame 10; a bailing chamber 101 supported by the frame 10, for receiving crops and for housing a formed bale; a conveying assembly 12, which delimits the bailing chamber 101 for imparting a rotating movement to the crops contained in the bailing chamber 101; a binder, configured for binding the formed bale with a fastening element.

The baler (either self-propelled or towed) may further comprise a control unit 13 and one or more electrical actuators (preferably, a group of electrical actuators), according to or more of the features included in the present description about the electrical actuators.

## Claims

1. A self-propelled round baler (1) for providing round bales, comprising:
- a frame (10);
- a first wheel (11A) and a second wheel (11B) associated to the frame (10);
- a bailing chamber (101) supported by the frame (10), for receiving crops and for housing a formed bale;
- a conveying assembly (12), which delimits the bailing chamber (101) for imparting a rotating movement to the crops contained in the bailing chamber (101);
- a binder, configured for binding the formed bale with a fastening element;
- a motorization unit (14) connected to the first wheel (11A) and to the second wheel (11B), for moving the baler on the ground;
- a steering system (15), configured to vary an advancing direction (A) of the round baler (1);
- a control unit (13), connected to the motorization unit (14) and to the steering system (15) for controlling them,
wherein the baler (1) is an autonomous driving vehicle, wherein the control unit (13) is configured for generating control signals for controlling the motorization unit (14) and the steering system (15),
wherein the round baler comprises a wireless connection, wherein the control unit (13) is configured to receive command signals (131) through the wireless connection and is programmed to derive the control signals from the command signals (131), **characterized in that** the command signals (131) are representative of a real time position (P) on the field of a driving object (1') moving on the field and wherein the control unit (13) is configured to process the command signals (131), to derive in real time a driving path (D) defined by the movement of the driving object (1'), and is programmed to control the steering system (15) to follow the driving path (D),
and **in that** the control unit includes a processor configured to process and generate data, and that the processor of the control unit is configured for receiving information representative of a real time position of the driving object on the ground and is programmed to generate the control signals responsive to that position.

2. The round baler (1) according to claim 1, wherein the control unit (13) is programmed to derive in real time either one of
a driving speed, for an advancing movement of the driving object (1') along the driving path (D);
a distance (d) between the round baler (1) and the driving object (1'), along the driving path (D),
and is programmed to control the motorization unit (14) to advance the round baler (1) on the driving path (D) at a working speed, responsive to the driving speed or to the distance (d).

3. The round baler (1) according to claim 2, wherein the working speed is higher than the driving speed.

4. The round baler (1) according to claim 2 or 3, wherein the control unit (13) is programmed to generate a warning signal (134) for the driving object (1'), responsive to the driving speed or to the distance (d).

5. The round baler (1) according to any of the preceding claims, comprising:
- a third wheel (11C) and a fourth wheel (11D);
- a first axle (102A), elongated along a transversal direction (T) and connected to the first wheel (11A) and the second wheel (11B);
- a second axle (102B), spaced from the first axle (120A) along a longitudinal direction (L), perpendicular to the transversal direction (T), and connected to the third wheel (11C) and the fourth wheel (11D),
wherein the second axle (102B) is associated to the steering system (15) to vary the advancing direction (a) of the round baler (1).

6. The round baler (1) according to claim 5, wherein a centre of gravity (G) of the round baler (1) is between the first axle (102A) and the second axle (102B) along the longitudinal direction (L) at a distance greater than 20cm from the first axle (102A).

7. The round baler (1) according to any of the preceding claims, comprising an on-board power source (16), connected to the motorization unit (14) for providing a motorization power.

8. The round baler (1) of claim 7, wherein the motorization unit (14) is an electrical or hydraulic motor and wherein the on-board power source (16) comprises a motor (161) and a generator (162), configured to transform the mechanical power of the motor (161) into electrical power.

9. The round baler (1) according to any one of the preceding claims, comprising:
- a first electrical actuator (19A), configured to actuate the conveying system (12);
- a pick-up device (104), rotable to pick-up crops from the ground;
- a third electrical actuator (19C), configured to rotate the pick-up device (104).

10. The round baler (1) according to any one of the preceding claims, wherein the control unit (13) is configured for receiving information representative of a real time position of a tractor on the ground and is programmed to generate the control signals responsive to the position of the tractor.

11. The round baler (1) according to any one of the preceding claims, wherein the control unit (13) is configured to control the motorization unit (14) and the steering system (15) simultaneously with respect to a movement of the a conveying assembly (12) for imparting the rotating movement to the crops.

12. An Agricultural working system comprising:
- a round baler (1) according to any one of the preceding claims;
- a driving object (1'),
- a remote control system (100A, 100B),
wherein the remote control system (100A, 100B) is configured to detect a real time position (P) of the driving object (1') moving on the field and is configured to send command signals (131), representative of the real time position (P) of the driving object (1'), to the control unit (13) of the baler (1) through the wireless connection.

13. A method for providing a round bale comprising the following steps:
- moving a round baler (1) including a baling chamber (101), along a working path;
- receiving of crops into the baling chamber (101);
- conveying crops into the baling chamber (101) with a conveying system (12);
- generating a bale into the baling chamber (101);
- binding the bale with a binder;
- discharging the bale,
wherein the step of moving includes a step of activating of a motorization unit (14), positioned on the baler (1) and connected to a first wheel (11A) and a second wheel (11B) of the baler (1), and wherein the step of moving includes a step of controlling, wherein a control unit (13) of the round baler (1) controls the activation of the motorization unit (14),
the method comprising a step of steering, wherein a steering system (15) varies an advancing direction (A) of the baler (1), and wherein the control unit (13) receives command signals (131) through a wireless connection and wherein the control unit (13) controls the motorization unit (14) and a steering system (15) in response to the command signals (131),
**characterized in that** the command signals (131) are representative of a real time position (P) on a field of a driving object (1') moving on the field,
the method comprising a step of derivation, wherein the control unit (13) processes the command signals (131) and derives a driving path (D) defined by the movement of the driving object (1'), and wherein the control unit (13) controls the steering system (15) to follow the driving path (D),
wherein the control unit includes a processor that processes and generates data, and that the processor of the control unit receives information representative of a real time position of the driving object on the ground and generates the control signals responsive to that position

14. The method of claim 13, wherein the step of derivation includes one or more of the following steps:
- deriving a driving speed, for an advancing movement of the driving object (1') along the driving path (D);
- deriving a distance (d) between the round baler (1) and the driving object (1'), along the driving path (D),
and wherein the control unit (13) controls the motorization unit (14) to advance the round baler (1) on the driving path (D) at a working speed, responsive to the driving speed or to the distance (d).

15. The method according to claim 13 or 14, wherein the baler is a self-propelled round baler and wherein the control unit (13) of the baler receives information representative of a real time position of a tractor on the ground and controls the movement of the baler along the working path responsive to the position of the tractor.

## Patentansprüche

1. Selbstfahrende Rundballenpresse (1) zum Bereitstellen von Rundballen, umfassend:
- einen Rahmen (10);
- ein erstes Rad (11A) und ein zweites Rad (11B), die mit dem Rahmen (10) verknüpft sind;
- eine Presskammer (101), die durch den Rahmen (10) gestützt wird, um Erntegut aufzunehmen und einen geformten Ballen unterzubringen;
- eine Förderbaugruppe (12), die die Presskammer (101) begrenzt, um dem in der Presskammer (101) enthaltenen Erntegut eine Drehbewegung zu verleihen;
- einen Binder, der ausgelegt ist, um den geformten Ballen mit einem Befestigungselement zu binden;
- eine Motorisierungseinheit (14), die mit dem ersten Rad (11A) und dem zweiten Rad (11B) verbunden ist, um die Ballenpresse auf dem Boden zu bewegen;
- ein Lenksystem (15), das ausgelegt ist, um eine Verfahrrichtung (A) der Rundballenpresse (1) zu variieren;
- eine Steuereinheit (13), die mit der Motorisierungseinheit (14) und dem Lenksystem (15) verbunden ist, um diese zu steuern,
wobei die Ballenpresse (1) ein autonom fahrendes Fahrzeug ist, wobei die Steuereinheit (13) ausgelegt ist, um Steuersignale zum Steuern der Motorisierungseinheit (14) und des Lenksystems (15) zu erzeugen,
wobei die Rundballenpresse eine drahtlose Verbindung umfasst, wobei die Steuereinheit (13) ausgelegt ist, um Befehlssignale (131) über die drahtlose Verbindung zu empfangen, und programmiert ist, um die Steuersignale von den Befehlssignalen (131) abzuleiten, **dadurch gekennzeichnet, dass** die Befehlssignale (131) für eine Echtzeitposition (P) eines fahrenden Objekts (1'), das sich auf dem Feld bewegt, auf dem Feld repräsentativ sind, und wobei die Steuereinheit (13) ausgelegt ist, um die Befehlssignale (131) zu verarbeiten, um in Echtzeit einen Fahrweg (D) abzuleiten, der durch die Bewegung des fahrenden Objekts (1') definiert ist, und programmiert ist, um das Lenksystem (15) so zu steuern, dass es dem Fahrweg (D) folgt,
und dadurch, dass die Steuereinheit einen Prozessor beinhaltet, der ausgelegt ist, um Daten zu verarbeiten und zu erzeugen, und dadurch, dass der Prozessor der Steuereinheit ausgelegt ist, um Informationen zu empfangen, die für eine Echtzeitposition des fahrenden Objekts auf dem Boden repräsentativ sind, und programmiert ist, um die Steuersignale als Reaktion auf diese Position zu erzeugen.

2. Rundballenpresse (1) nach Anspruch 1, wobei die Steuereinheit (13) programmiert ist, um in Echtzeit einen der folgenden Werte abzuleiten:
eine Fahrgeschwindigkeit für eine Verfahrbewegung des fahrenden Objekts (1') entlang des Fahrwegs (D) oder
einen Abstand (d) zwischen der Rundballenpresse (1) und dem fahrenden Objekt (1') entlang des Fahrwegs (D),
und programmiert ist, um die Motorisierungseinheit (14) so zu steuern, dass sie die Rundballenpresse (1) auf dem Fahrweg (D) bei einer Arbeitsgeschwindigkeit als Reaktion auf die Fahrgeschwindigkeit oder den Abstand (d) verfährt.

3. Rundballenpresse (1) nach Anspruch 2, wobei die Arbeitsgeschwindigkeit höher als die Fahrgeschwindigkeit ist.

4. Rundballenpresse (1) nach Anspruch 2 oder 3, wobei die Steuereinheit (13) programmiert ist, um ein Warnsignal (134) für das fahrende Objekt (1') als Reaktion auf die Fahrgeschwindigkeit oder den Abstand (d) zu erzeugen.

5. Rundballenpresse (1) nach einem der vorhergehenden Ansprüche, umfassend:
- ein drittes Rad (11C) und ein viertes Rad (11D);
- eine erste Achse (102A), die entlang einer Querrichtung (T) langgestreckt und mit dem ersten Rad (11A) und dem zweiten Rad (11B) verbunden ist;
- eine zweite Achse (102B), die von der ersten Achse (120A) entlang einer Längsrichtung (L) senkrecht zu der Querrichtung (T) beabstandet und mit dem dritten Rad (11C) und dem vierten Rad (11D) verbunden ist,
wobei die zweite Achse (102B) mit dem Lenksystem (15) verknüpft ist, um die Verfahrrichtung (a) der Rundballenpresse (1) zu variieren.

6. Rundballenpresse (1) nach Anspruch 5, wobei ein Schwerpunkt (G) der Rundballenpresse (1) zwischen der ersten Achse (102A) und der zweiten Achse (102B) entlang der Längsrichtung (L) in einem Abstand größer als 20 cm von der ersten Achse (102A) liegt.

7. Rundballenpresse (1) nach einem der vorhergehenden Ansprüche, umfassend eine integrierte Energiequelle (16), die mit der Motorisierungseinheit (14) verbunden ist, um eine Antriebsleistung bereitzustellen.

8. Rundballenpresse (1) nach Anspruch 7, wobei die Motorisierungseinheit (14) ein Elektro- oder Hydraulikmotor ist, und wobei die integrierte Energiequelle (16) einen Motor (161) und einen Generator (162) umfasst, der ausgelegt ist, um die mechanische Leistung des Motors (161) in elektrische Leistung umzuwandeln.

9. Rundballenpresse (1) nach einem der vorhergehenden Ansprüche, umfassend:
- einen ersten elektrischen Aktor (19A), der ausgelegt ist, um das Fördersystem (12) zu betätigen;
- eine Aufnahmevorrichtung (104), die drehbar ist, um Erntegut vom Boden aufzunehmen;
- einen dritten elektrischen Aktor (19C), der ausgelegt ist, um die Aufnahmevorrichtung (104) zu drehen.

10. Rundballenpresse (1) nach einem der vorhergehenden Ansprüche, wobei die Steuereinheit (13) ausgelegt ist, um Informationen zu empfangen, die für eine Echtzeitposition eines Traktors auf dem Boden repräsentativ sind, und programmiert ist, um die Steuersignale als Reaktion auf die Position des Traktors zu erzeugen.

11. Rundballenpresse (1) nach einem der vorhergehenden Ansprüche, wobei die Steuereinheit (13) ausgelegt ist, um die Motorisierungseinheit (14) und das Lenksystem (15) gleichzeitig in Bezug auf eine Bewegung der Förderbaugruppe (12) zu steuern, um dem Erntegut die Drehbewegung zu verleihen.

12. Landwirtschaftliches Arbeitssystem, umfassend:
- eine Rundballenpresse (1) nach einem der vorhergehenden Ansprüche;
- ein fahrendes Objekt (1');
- ein Fernsteuersystem (100A, 100B),
wobei das Fernsteuersystem (100A, 100B) ausgelegt ist, um eine Echtzeitposition (P) des fahrenden Objekts (1'), das sich auf dem Feld bewegt, zu erkennen, und ausgelegt ist, um der Steuereinheit (13) der Ballenpresse (1) über die drahtlose Verbindung Befehlssignale (131) zu senden, die für die Echtzeitposition (P) des fahrenden Objekts (1') repräsentativ sind.

13. Verfahren zum Bereitstellen einer Rundballenpresse, umfassend die folgenden Schritte:
- Bewegen einer Rundballenpresse (1), die eine Presskammer (101) beinhaltet, entlang eines Arbeitswegs;
- Aufnehmen von Erntegut in der Presskammer (101);
- Fördern von Erntegut in die Presskammer (101) mit einem Fördersystem (12);
- Erzeugen eines Ballens in der Presskammer (101);
- Binden des Ballens mit einem Binder;
- Entladen des Ballens,
wobei der Schritt des Bewegens einen Schritt des Aktivierens einer Motorisierungseinheit (14), die an der Ballenpresse (1) positioniert und mit einem ersten Rad (11A) und einem zweiten Rad (11B) der Ballenpresse (1) verbunden ist, beinhaltet, und wobei der Schritt des Bewegens einen Schritt des Steuerns beinhaltet, wobei eine Steuereinheit (13) der Rundballenpresse (1) die Aktivierung der Motorisierungseinheit (14) steuert,
wobei das Verfahren einen Schritt des Lenkens umfasst, wobei ein Lenksystem (15) eine Verfahrrichtung (A) der Ballenpresse (1) variiert, und wobei die Steuereinheit (13) Befehlssignale (131) über eine drahtlose Verbindung empfängt, und wobei die Steuereinheit (13) die Motorisierungseinheit (14) und ein Lenksystem (15) als Reaktion auf die Befehlssignale (131) steuert,
**dadurch gekennzeichnet, dass** die Befehlssignale (131) für eine Echtzeitposition (P) eines fahrenden Objekts (1'), das sich auf dem Feld bewegt, auf dem Feld repräsentativ sind,
wobei das Verfahren einen Schritt des Ableitens umfasst, wobei die Steuereinheit (13) die Befehlssignale (131) verarbeitet und einen Fahrweg (D) ableitet, der durch die Bewegung des fahrenden Objekts (1') definiert ist, und wobei die Steuereinheit (13) das Lenksystem (15) so steuert, dass es dem Fahrweg (D) folgt,
wobei die Steuereinheit einen Prozessor beinhaltet, der Daten verarbeitet und erzeugt, und wobei der Prozessor der Steuereinheit Informationen empfängt, die für eine Echtzeitposition des fahrenden Objekts auf dem Boden repräsentativ sind, und die Steuersignale als Reaktion auf diese Position erzeugt.

14. Verfahren nach Anspruch 13, wobei der Schritt des Ableitens einen oder mehrere der folgenden Schritte beinhaltet:
- Ableiten einer Fahrgeschwindigkeit für eine Verfahrbewegung des fahrenden Objekts (1') entlang des Fahrwegs (D);
- Ableiten eines Abstands (d) zwischen der Rundballenpresse (1) und dem fahrenden Objekt (1') entlang des Fahrwegs (D),
und wobei die Steuereinheit (13) die Motorisierungseinheit (14) so steuert, dass sie die Rundballenpresse (1) auf dem Fahrweg (D) bei einer Arbeitsgeschwindigkeit als Reaktion auf die Fahrgeschwindigkeit oder den Abstand (d) verfährt.

15. Verfahren nach Anspruch 13 oder 14, wobei die Ballenpresse eine selbstfahrende Rundballenpresse ist, und wobei die Steuereinheit (13) der Ballenpresse Informationen empfängt, die für eine Echtzeitposition eines Traktors auf dem Boden repräsentativ sind, und die Bewegung der Ballenpresse entlang des Arbeitswegs als Reaktion auf die Position des Traktors steuert.

## Revendications

1. Presse à balles rondes automotrice (1) pour fournir des balles rondes, comprenant :
- un châssis (10) ;
- une première roue (11A) et une deuxième roue (11B) associées au châssis (10) ;
- une chambre de mise en balle (101) supportée par le châssis (10), pour recevoir les récoltes et pour loger une balle formée ;
- un ensemble de transport (12), qui délimite la chambre de mise en balle (101) pour imprimer un mouvement de rotation aux récoltes contenues dans la chambre de mise en balle (101) ;
- un dispositif de liage, configuré pour lier la balle formée avec un élément de fixation ;
- une unité de motorisation (14) reliée à la première roue (11A) et à la deuxième roue (11B), pour déplacer la presse à balles sur le sol ;
- un système de direction (15), configuré pour modifier une direction d'avancement (A) de la presse à balles rondes (1) ;
- une unité de commande (13), reliée à l'unité de motorisation (14) et au système de direction (15) pour les commander,
dans laquelle la presse à balles (1) est un véhicule à conduite autonome, dans laquelle l'unité de commande (13) est configurée pour générer des signaux de commande pour commander l'unité de motorisation (14) et le système de direction (15),
dans laquelle la presse à balles rondes comprend une connexion sans fil, dans laquelle l'unité de commande (13) est configurée pour recevoir des signaux d'instruction (131) par l'intermédiaire de la connexion sans fil et est programmée pour dériver les signaux de commande à partir des signaux d'instruction (131), **caractérisée en ce que** les signaux d'instruction (131) sont représentatifs d'une position en temps réel (P) sur le champ d'un objet roulant (1') se déplaçant sur le champ et dans laquelle l'unité de commande (13) est configurée pour traiter les signaux d'instruction (131), pour dériver en temps réel une trajectoire de déplacement (D) définie par le mouvement de l'objet roulant (1'), et est programmée pour commander le système de direction (15) pour suivre la trajectoire de déplacement (D),
et **en ce que** l'unité de commande inclut un processeur configuré pour traiter et générer des données, et **en ce que** le processeur de l'unité de commande est configuré pour recevoir des informations représentatives d'une position en temps réel de l'objet roulant sur le sol et est programmé pour générer les signaux de commande en réponse à cette position.

2. Presse à balles rondes (1) selon la revendication 1, dans laquelle l'unité de commande (13) est programmée pour dériver en temps réel l'une ou l'autre d'une
vitesse de déplacement, pour un mouvement d'avancement de l'objet roulant (1') le long de la trajectoire de déplacement (D) ;
une distance (d) entre la presse à balles rondes (1) et l'objet roulant (1'), le long de la trajectoire de déplacement (D),
et est programmée pour commander l'unité de motorisation (14) pour faire avancer la presse à balles rondes (1) sur la trajectoire de déplacement (D) à une vitesse de travail, en réponse à la vitesse de déplacement ou à la distance (d).

3. Presse à balles rondes (1) selon la revendication 2, dans laquelle la vitesse de travail est supérieure à la vitesse de déplacement.

4. Presse à balles rondes (1) selon la revendication 2 ou 3, dans laquelle l'unité de commande (13) est programmée pour générer un signal d'avertissement (134) pour l'objet roulant (1'), en réponse à la vitesse de déplacement ou à la distance (d).

5. Presse à balles rondes (1) selon l'une quelconque des revendications précédentes, comprenant :
- une troisième roue (11C) et une quatrième roue (11D) ;
- un premier essieu (102A), allongé selon une direction transversale (T) et relié à la première roue (11A) et à la deuxième roue (11B) ;
- un second essieu (102B), espacé du premier essieu (120A) le long d'une direction longitudinale (L), perpendiculaire à la direction transversale (T), et relié à la troisième roue (11C) et à la quatrième roue (11D),
dans laquelle le second essieu (102B) est associé au système de direction (15) pour modifier la direction d'avancement (a) de la presse à balles rondes (1).

6. Presse à balles rondes (1) selon la revendication 5, dans laquelle un centre de gravité (G) de la presse à balles rondes (1) se situe entre le premier essieu (102A) et le second essieu (102B) le long de la direction longitudinale (L) à une distance supérieure à 20 cm du premier essieu (102A).

7. Presse à balles rondes (1) selon l'une quelconque des revendications précédentes, comprenant une source de puissance embarquée (16), connectée à l'unité de motorisation (14) pour fournir une puissance de motorisation.

8. Presse à balles rondes (1) selon la revendication 7, dans laquelle l'unité de motorisation (14) est un moteur électrique ou hydraulique et dans laquelle la source d'alimentation embarquée (16) comprend un moteur (161) et un générateur (162), configuré pour transformer la puissance mécanique du moteur (161) en puissance électrique.

9. Presse à balles rondes (1) selon l'une quelconque des revendications précédentes, comprenant :
- un premier actionneur électrique (19A), configuré pour actionner le système de transport (12) ;
- un dispositif de ramassage (104), qui peut tourner pour ramasser les récoltes du sol ;
- un troisième actionneur électrique (19C), configuré pour faire tourner le dispositif de ramassage (104).

10. Presse à balles rondes (1) selon l'une quelconque des revendications précédentes, dans laquelle l'unité de commande (13) est configurée pour recevoir des informations représentatives d'une position en temps réel d'un tracteur sur le sol et est programmée pour générer les signaux de commande en réponse à la position du tracteur.

11. Presse à balles rondes (1) selon l'une quelconque des revendications précédentes, dans laquelle l'unité de commande (13) est configurée pour commander l'unité de motorisation (14) et le système de direction (15) simultanément par rapport à un mouvement de l'ensemble de transport (12) pour imprimer le mouvement de rotation aux récoltes.

12. Système de travail agricole, comprenant :
- une presse à balles rondes (1) selon l'une quelconque des revendications précédentes ;
- un objet roulant (1'),
- un système de commande à distance (100A, 100B),
dans lequel le système de commande à distance (100A, 100B) est configuré pour détecter une position en temps réel (P) de l'objet roulant (1') se déplaçant sur le champ et est configuré pour envoyer des signaux d'instruction (131), représentatifs de la position en temps réel (P) de l'objet roulant (1'), à l'unité de commande (13) de la presse à balles (1) par l'intermédiaire de la connexion sans fil.

13. Procédé pour fournir une balle ronde, comprenant les étapes suivantes :
- déplacer une presse à balles rondes (1) incluant une chambre de mise en balle (101), le long d'une trajectoire de travail ;
- recevoir les récoltes dans la chambre de mise en balle (101) ;
- transporter les récoltes dans la chambre de mise en balle (101) avec un système de transport (12) ;
- générer une balle dans la chambre de mise en balle (101) ;
- lier la balle avec un dispositif de liage ;
- décharger la balle,
dans lequel l'étape de déplacer inclut une étape d'activer une unité de motorisation (14), positionnée sur la presse à balles (1) et reliée à une première roue (11A) et à une deuxième roue (11B) de la presse à balles (1), et dans lequel l'étape de déplacer inclut une étape de commander, dans lequel une unité de commande (13) de la presse à balles rondes (1) commande l'activation de l'unité de motorisation (14),
le procédé comprenant une étape de diriger, dans lequel un système de direction (15) modifie une direction d'avancement (A) de la presse à balles (1), et dans lequel l'unité de commande (13) reçoit des signaux d'instruction (131) par l'intermédiaire d'une connexion sans fil et dans lequel l'unité de commande (13) commande l'unité de motorisation (14) et un système de direction (15) en réponse aux signaux d'instruction (131),
**caractérisé en ce que** les signaux d'instruction (131) sont représentatifs d'une position en temps réel (P) sur un champ d'un objet roulant (1') se déplaçant sur le champ,
le procédé comprenant une étape de dériver, dans lequel l'unité de commande (13) traite les signaux d'instruction (131) et dérive une trajectoire de déplacement (D) définie par le mouvement de l'objet roulant (1'), et dans lequel l'unité de commande (13) commande le système de direction (15) pour suivre la trajectoire de déplacement (D),
dans lequel l'unité de commande inclut un processeur qui traite et génère des données, et dans lequel le processeur de l'unité de commande reçoit des informations représentatives d'une position en temps réel de l'objet roulant sur le sol et génère les signaux de commande en réponse à cette position.

14. Procédé selon la revendication 13, dans lequel l'étape de dériver inclut une ou plusieurs des étapes suivantes :
- dériver une vitesse de déplacement, pour un mouvement d'avancement de l'objet roulant (1') le long de la trajectoire de déplacement (D) ;
- dériver une distance (d) entre la presse à balles rondes (1) et l'objet roulant (1'), le long de la trajectoire de déplacement (D),
et dans lequel l'unité de commande (13) commande l'unité de motorisation (14) pour faire avancer la presse à balles rondes (1) sur la trajectoire de déplacement (D) à une vitesse de travail, en réponse à la vitesse de déplacement ou à la distance (d).

15. Procédé selon la revendication 13 ou 14, dans lequel la presse à balles est une presse à balles rondes automotrice et dans lequel l'unité de commande (13) de la presse à balles reçoit des informations représentatives d'une position en temps réel d'un tracteur sur le sol et commande le mouvement de la presse à balles le long de la trajectoire de travail en réponse à la position du tracteur.
